(19) Europäisches Patentamt
European Patent Office
Office européen des brevets

(11) **EP 4 428 518 A1**

(12) **EUROPÄISCHE PATENTANMELDUNG**

(43) Veröffentlichungstag:
**11.09.2024  Patentblatt 2024/37**

(21) Anmeldenummer: 24157657.8

(22) Anmeldetag: **14.02.2024**

(51) Internationale Patentklassifikation (IPC):
**G01N 3/32** (2006.01)

(52) Gemeinsame Patentklassifikation (CPC):
**G01N 3/32;** G01N 2203/0016; G01N 2203/0066;
G01N 2203/0073; G01N 2203/0216;
G01N 2203/0218; G01N 2203/0647

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **24.02.2023  DE 102023104595**

(71) Anmelder: **Deutsches Zentrum für Luft- und Raumfahrt e.V.**
**53227 Bonn (DE)**

(72) Erfinder:
• **BREITBARTH, Eric**
  **51147 Köln (DE)**
• **STROHMANN, Tobias**
  **51147 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **DIGITAL-PHYSIKALISCHES PRÜFSYSTEM SOWIE DIGITAL-PHYSIKALISCHES PRÜFVERFAHREN**

(57)    Digital-physikalisches Prüfsystem sowie digital-physikalisches Prüfverfahren zur Charakterisierung des Ermüdungs- und/oder Rissgeschehens für Bauteile bzw. Bauteilstrukturen. Bei dem erfindungsgemäßen Prüfsystem sowie -verfahren findet durch die vorgesehene Verbindung des mittels der Prüfmaschine durchgeführten Experiments auf Prüfkörperebene und der numerischen Simulation auf Gesamtbauteilebene über den gegenseitigen Austausch der Mess- bzw. Berechnungswerte eine Verbindung des digitalen/numerischen Berechnungsmodells mit der physikalischen Prüfung in der Prüfmaschine statt. Durch den Parameteraustausch erfolgt somit erfindungsgemäß eine Verzahnung zwischen Experiment in der Prüfmaschine und dem digitalen bzw. numerischen Berechnungsmodell, wobei sich diese gegenseitig steuern bzw. regeln. Durch das erfindungsgemäße Prüfsystem wird durch die gewählte Verzahnung ein digitalphysikalischer Regelkreis ausgebildet.

Fig. 1

EP 4 428 518 A1

**Beschreibung**

Die vorliegende Erfindung betrifft ein digital-physikalisches Prüfsystem sowie ein digital-physikalisches Prüfverfahren.

Bei der Inspektion und Überwachung von strukturellen Bauteilen und Komponenten, welche nicht-konstanten Lasten während des Betriebs ausgesetzt sind, ist es erforderlich, eine hinreichend genaue Erkennung und Verfolgung von Defekten, Beschädigungen und Rissen zu gewährleisten. Der sogenannte Ermüdungsriss bzw. der Rissfortschritt von Ermüdungsrissen sind in allen technischen Bereichen, bei welchen Bauteile und Komponenten den vorbezeichneten nicht-konstanten Lasten und insbesondere eben dynamisch und wechselnden Lasten ausgesetzt sind, einer der relevantesten Schadensfälle. Insbesondere bei Leichtbaustrukturen wie beispielsweise bei Luftfahrzeugen ist das Auftreten von Ermüdungsrissen ein relevanter Sicherheitsaspekt, welcher bereits bei der Auslegung von Bauteilen unbedingt berücksichtigt werden muss.

Bei werkstoffmechanischen Versuchen zur Charakterisierung von Rissen, die insbesondere zur Untersuchung des Thresholds, des Rissfortschritts, der Bruchzähigkeiten und der Risswiderstandskurven dienen müssen die Risse in ihrer Länge und Orientierung sehr genau erfasst und vermessen werden. Derartige Versuche finden auf Coupon-Ebene mit einer Prüfkörpergröße im Bereich von 1 bis 500 mm statt. Aus dem Stand der Technik ist es ebenfalls bekannt, eine Prüfung von ganzen Flugzeugstrukturen vorzunehmen. Die vorbezeichneten "Full-Scale"-Versuche sind in der Praxis extrem zeit- und kostenintensiv. Aus diesem Grund sollen sie nach Möglichkeit auf das unbedingt notwendige Minimum reduziert bzw. nach Möglichkeit gänzlich ersetzt werden.

Im Rahmen schnellerer und zunehmend virtueller Zulassungsprozesse ist es ein gesetztes Ziel die Versuche auf Strukturebene ("Large-Scale" bzw. "Full-Scale"-Versuche) auf einen notwendigen minimalen Anteil zu reduzieren.

Durch die zeitintensiven und kostenaufwendigen Large-Scale- und Full-Scale-Versuche sind Entwicklungs- und Zulassungszeiten von Bauteilen bzw. Bauteilstrukturen, wie beispielsweise Luftfahrzeugstrukturen sehr zeitintensiv und erfordern lange Entwicklungszeiten. Weiterhin sind für den Ersatz der sogenannten Large-Scale und Full-Scale-Versuche, vor allen Dingen bzgl. der Ausbreitung von Ermüdungsrissen, umfangreiche Materialmodelle notwendig, welche auch die Wechselwirkung der lokalen Rissspitzenmechanik und der Mikrostruktur einbeziehen. Dabei ist eine reine Simulation, z. B. mittels Finite-Elemente-Methode gemäß dem Stand der Technik häufig nicht zielführend, da die komplexen Struktur-Eigenschaftsbeziehungen auf mikroskopischer Skala um eine Rissspitze nur teilweise über die numerischen Modelle abgebildet werden können und so die ständige Sicherheit nicht immer gewährleistet bzw. erreicht werden kann.

Ausgehend von dem vorbezeichneten Stand der Technik stellt sich die vorliegende Erfindung die Aufgabe, die Verfahren bzw. Prüfsysteme zur Charakterisierung des Ermüdungs- und/oder Rissgeschehens für Bauteile bzw. Bauteilstrukturen zu vereinfachen und den benötigten Zeitaufwand deutlich zu reduzieren jedoch gleichzeitig die notwendige Genauigkeit und Zuverlässigkeit der Verfahren und Prüfsysteme zu gewährleisten.

Erfindungsgemäß gelöst wird die Aufgabe gemäß einem ersten Aspekt der Erfindung durch ein digital-physikalisches Prüfsystem, insbesondere für die werkstoffmechanische Prüfung.

Das erfindungsgemäße digital-physikalische Prüfsystem umfasst eine Simulationsvorrichtung umfassend ein numerisches Berechnungsmodell zur digitalen Modellierung der statischen Rissspitzenbeanspruchung eines rissbehafteten Gesamtbauteils und eine Testvorrichtung zur physikalischen Prüfung des dynamischen Schädigungs- und Rissfortschrittverhaltens eines rissbehafteten Prüfkörpers. Die Testvorrichtung umfasst eine Prüfmaschine mit einer Einspannungseinrichtung zur Festlegung und dynamischen Lastbeaufschlagung des rissbehafteten Prüfkörpers mittels der Prüfmaschine und eine Erkennungseinreichung zur Detektion und Nachverfolgung mindestens eines rissbehafteten Bereichs des Prüfkörpers.

Das Prüfsystem ist ausgebildet, die folgenden Verfahrensschritte automatisierbar auszuführen:

a) Initiales Berechnen von Parametern der Rissspitzenbeanspruchung des rissbehafteten Gesamtbauteils über die Simulationsvorrichtung unter Vorgabe einer initialen Rissgeometrie $a_{initial}$ des Gesamtbauteils, einwirkender äußerer Lasten $\boldsymbol{F}$ auf das Gesamtbauteil und dem zeitlichen Verlauf der einwirkenden Lasten $\Delta\boldsymbol{F}$;

b) Aufbringen einer initialen Anzahl an Lastspielen auf den rissbehafteten Prüfkörper durch Vorgabe der berechneten Parameter der Rissspitzenbeanspruchung aus Schritt a) und einer Lastspielzahl N mittels der Prüfmaschine und Messen der veränderten Rissgeometrie $a_N$, umfassend die Risspfadgeometrie sowie die Rissspitzenkoordinaten $a_x$ und $a_y$, an dem Prüfkörper mittels der Erkennungsvorrichtung als Rissfortschrittsinkrement aufgrund des eingeprägten Lastspielinkrements;

c) Einbringen der veränderten Rissgeometrie $a_N$ aus Schritt b) in das numerische Berechnungsmodell des Gesamtbauteils und anschließendes Berechnen von Parametern der Rissspitzenbeanspruchung des rissbehafteten Gesamtbauteils mit der veränderten Rissgeometrie $a_N$ über die Simulationsvorrichtung unter Vorgabe einwirkender äußerer Lasten $\boldsymbol{F}$ und dem zeitlichen Verlauf der einwirkenden Lasten $\Delta\boldsymbol{F}$; und

d) Optionales Wiederholen der Verfahrensschritte b) und c) um eine beliebige ganzzahlige Anzahl an Wiederholungen, wobei im Schritt b) jeweils die berechneten Parameter der Rissspitzenbeanspruchung aus dem vorhergehenden Schritt übernommen werden und wobei im Schritt c) die veränderte Rissgeometrie $a_N$ aus dem vorhergehenden Schritt übernommen und eingebracht wird zur Bestimmung eines fortschreitenden Ermüdungsrisses.

Bei dem erfindungsgemäßen Prüfsystem findet durch die Verbindung des mittels der Prüfmaschine durchgeführten Experiments auf Prüfkörperebene und der numerischen Simulation des Gesamtbauteils über den gegenseitigen Austausch der Mess- bzw. Berechnungswerte eine Verbindung des digitalen/numerischen Berechnungsmodells mit der physikalischen Prüfung in der Prüfmaschine statt. Durch den Parameteraustausch erfolgt somit erfindungsgemäß eine Verzahnung zwischen Experiment in der Prüfmaschine und dem digitalen Berechnungsmodell, wobei sich diese gegenseitig steuern bzw. regeln. Durch das erfindungsgemäße Prüfsystem wird durch die gewählte Verzahnung ein digitalphysikalischer Regelkreis ausgebildet.

Der rissbehaftete Prüfkörper, welcher in der Prüfmaschine eingespannt ist, stellt das lokale Schädigung- und Rissverhalten des rissbehafteten Gesamtbauteils nach. Insbesondere kann es sich erfindungsgemäß bei dem rissbehafteten Prüfkörper um einen standardisierten Prüfkörper handeln, wobei der Prüfkörper besonders bevorzugt eine Größe zwischen 1 mm bis 1000 mm Länge aufweisen kann. Jedenfalls sind die Abmessungen des Prüfkörpers gemäß der vorliegenden Erfindung kleiner als die Abmessungen des Gesamtbauteils und die Geometrie des Prüfkörpers gemäß der vorliegenden Erfindung weniger komplex als die Geometrie des Gesamtbauteils.

Die Simulationseinrichtung kann weiterhin dazu ausgebildet sein, um Parameter der Rissspitzenbeanspruchung für einen stationären Riss abhängig von auf das Gesamtbauteil einwirkender äußerer Lasten $F$ und dem zeitlichen Verlauf der Lasten $\Delta F$ und der der Rissgeometrie $a$ zu berechnen.

Bei den zu berechnenden Parametern der Rissspitzenbeanspruchung können diese ausgewählt werden aus mindestens einem Element aus der Gruppe von:

- den Spannungsintensitätsfaktoren $K_I$, $K_{II}$, $K_{III}$;
- der T-Spannung; und/oder
- Terme höherer Ordnung der Williams-Reihe
- den Spannungen $\sigma_x$, $\sigma_y$, $\tau_{xy}$.

Die Prüfmaschine kann dazu ausgebildet sein, eine Mixed-Mode-Belastung auf den Prüfkörper einzuprägen bzw. über eine biaxiale Lastaufbringung definierte Spannungen parallel und senkrecht zu einem eingebrachten Riss in den Prüfkörper einzubringen.

Erfindungsgemäß werden zwar Die Begriffe der Biaxialität bzw. der biaxialen Lastaufbringung verwendet, jedoch können erfindungsgemäß auch multiaxiale Lastzustände auf einen Prüfkörper eingebracht werden.

In der Prüfmaschine kann bevorzugt ein genormter Prüfkörper der Rissspitzenbelastung ausgesetzt werden.

Der Prüfkörper kann insbesondere den lokalen rissbehafteten Ausschnitt des Gesamtbauteils abbilden.

Die Testvorrichtung kann dazu ausgebildet sein im Verfahrensschritt b) folgende weitere Unterverfahrensschritte auszuführen:

b1) Generieren mindestens einer ersten makroskopischen Referenzaufnahme mittels einer ersten ortsfesten Bildaufnahmeeinrichtung und einer Mehrzahl von mikroskopischen Referenzaufnahmen mittels einer zweiten positionierbaren Bildaufnahmeeinrichtung des unbelasteten rissbehafteten Prüfkörpers;
b2) Aufprägen einer Last oder eines Lastregimes auf den rissbehafteten Prüfkörper;
b3) Generieren mindestens einer makroskopischen Aufnahme des rissbehafteten Prüfkörpers unter anliegender Last gemäß Verfahrensschritt b2) und/oder nach Entlastung über die erste ortsfeste Bildaufnahmeeinrichtung
b4) Berechnen der aktuellen Lokalisierung mindestens eines Bereiches einer Rissspitze im Prüfkörper unter bevorzugt unter Verwendung eines trainierten neuronalen Netzwerkes für die Risserkennung;
b5) bevorzugt Ausrichten der zweiten positionierbaren Bildaufnahmeeinrichtung anhand des mindestens einen Bereiches einer Rissspitze im Prüfkörper gemäß Verfahrensschritt b4) und Generieren mindestens einer mikroskopischen Aufnahme des mindestens einen Bereiches einer Rissspitze im Prüfkörper mittels der zweiten Bildaufnahmeeinrichtung unter anliegender Last gemäß Verfahrensschritt b2) und/oder nach Entlastung; und
b6) Optionales Wiederholen der Verfahrensschritte b2) bis b5) um eine beliebige ganzzahlige Anzahl an Wiederholungen, wobei im Verfahrensschritt b2) eine von der zuvor aufgeprägten Last abweichende Last oder ein abweichendes Lastregime aufgeprägt wird.

Erfindungsgemäß kann im Verfahrensschritt b4) der mindestens eine Bereich einer Rissspitze im Prüfkörper unter Verwendung eines beliebigen automatisierten Verfahrens erfolgen. Die bevorzugt Verwendung eines trainierten neuronalen Netzwerkes ist damit nur als eine Beispiel mehrerer Möglichkeiten für die automatisierten Berechnung der Lokalisation zu verstehen.

Das trainierte neuronale Netzwerk für die Risserkennung kann ein bevorzugt neuronales Netz (CNN) mit U-Netzarchitektur mit mehreren Kodier- und Dekodierblöcken als Segmentierungszweig; und ein vollständig verbundenes neuronales Netz (FCNN) als Regressionszweig umfassen.

Dabei kann es vorgesehen sein, dass die Dekodierblöcke mit den Kodierblöcke über einen Basisblock miteinander verbunden sind, wobei die Kodier- und

Dekodierblöcke der gleichen Ebene durch eine "Skip"/Sprung-Verbindung direkt miteinander verbunden sind, wobei der Regressionszweig mit dem Basisblock des Segmentierungszweigs verbunden ist, und

wobei das computerimplementierte Trainingsverfahren zum Erhalt des trainierten neuronalen Netzes für die Schädigungserkennung die Schritte umfasst:

1) Initialisierung des neuronalen Netzes mit zufälligen Gewichten;
2) Berechnen des mittleren quadratischen Fehlers zwischen der Vorhersage der Rissspitzenposition und der tatsächlichen Rissspitzenposition $y = (\hat{y}_1, \hat{y}_2) \in [-1,1]^2$ über die Formel:

$$\mathrm{MSE}(y, \hat{y}) = \sqrt{(y_1 - \hat{y}_1)^2 + (y_2 - \hat{y}_2)^2} \qquad (1)$$

als Fehler des Regressionszweiges des neuronalen Netzes;
3) Berechnen des Fehlers der Rissspitzensegmentierung Dice-Fehlers" für die Segmentierungsaufgabe über die Formel:

$$\mathrm{Dice}(z, \hat{z}) = 1 - \frac{2\sum_{ij} z_{ij}\,\hat{z}_{ij} + \varepsilon}{\sum_{ij}(z_{ij} + \hat{z}_{ij}) + \varepsilon} \qquad (2)$$

wobei $z = (z_{ij})$ mit $z_{ij} \in [0,1]$ die Segmentierungsausgabe (nach Sigmoid-Aktivierung) bezeichnet und $\hat{z} = (\hat{z}_{ij})$ für die Grundwahrheit steht. Mit $\varepsilon > 0$ als kleine Konstante, die eingeführt wird, um den Fall $z = \hat{z} \equiv 0$ abzudecken, wobei bevorzugt $\varepsilon = 10^{-6}$ gewählt wird als Fehler des Segmentierungszweiges des neuronalen Netzes;
4) Berechnen einer gewichteten Gesamtverlustfunktion $\mathrm{Loss}_\omega(z, y, \hat{z}, \hat{y})$ über die Formel:

$$\mathrm{Loss}_\omega(z, y, \hat{z}, \hat{y}) = \mathrm{Dice}(z, \hat{z}) + \omega\,\mathrm{MSE}(y, \hat{y}) \qquad (3)$$

wobei $\omega \geq 0$ ein Gewichtungsfaktor ist, der den Trainingseinfluss des FCNN/Segmentierungszweigs des neuronalen Netzes abstimmt;
5) Optimieren der Modellparameter des neuronalen Netzes mittels "Backpropagation"-Algorithmus unter Nutzung der gewichteten Gesamtverlustfunktion $\mathrm{Loss}_\omega(z, y, \hat{z}, \hat{y})$ zum Erhalt des trainierten neuronalen Netzes für die Schädigungserkennung.

Erfindungsgemäß kann es vorgesehen sein, dass das Unterverfahren vor dem Verfahrensschritt b2) weiterhin den Schritt umfasst:
b1-1) Kalibrieren der Positionierung der zweiten Bildaufnahmeeinrichtung durch Abgleichen der aktuellen Raumlage der zweiten Bildaufnahmeeinrichtung gegenüber der ersten ortsfesten Bildaufnahmeeinrichtung.

Weiterhin kann es vorgesehen sein, dass im Verfahrensschritt b1) makroskopische Referenzaufnahmen des gesamten unbelasteten rissbehafteten Prüfkörpers mittels einer ersten ortsfesten Bildaufnahmeeinrichtung und eine Mehrzahl von mikroskopischen Referenzaufnahmen des gesamten unbelasteten Prüfkörpers mittels der zweiten positionierbaren Bildaufnahmeeinrichtung generiert werden.

Es kann weiterhin vorgesehen werden, dass das Verfahren in dem Schritt b5) zusätzlich den Schritt umfasst:
b51) optisches Fokussieren der zweiten Bildaufnahmeeinrichtung auf dem Bereich der Schädigung bzw. der Rissspitze.

Gemäß einem weiteren Aspekt der vorliegenden Erfindung betrifft die Erfindung ein digital-physikalisches Prüfverfahren welches die Verfahrensschritte umfasst:

a) Initiales Berechnen von Parametern der Rissspitzenbeanspruchung des rissbehafteten Gesamtbauteils über eine Simulationsvorrichtung umfassend ein numerisches Berechnungsmodell zur digitalen Modellierung der statischen Rissspitzenbeanspruchung eines rissbehafteten Gesamtbauteils unter Vorgabe einer initialen Rissgeometrie $a_{initial}$ des Gesamtbauteils, einwirkender äußerer Lasten $\boldsymbol{F}$ auf das Gesamtbauteil und dem zeitlichen Versatz $t$ der einwirkenden Lasten *F;*

b) Aufbringen einer Zahl an Lastspielen N auf einen rissbehafteten Prüfkörper mittels einer Prüfmaschine durch Vorgabe der berechneten Parameter der Rissspitzenbeanspruchung aus Schritt a) und einer Lastspielzahl N und Messen der veränderten Rissgeometrie $a_N$ mittels einer Erkennungseinrichtung zur Detektion und Nachverfolgung mindestens eines rissbehafteten Bereiches an dem Prüfkörper als Rissfortschrittsinkrement aufgrund des eingeprägten Lastspielinkrements;

c) Einbringen der veränderten Rissgeometrie $a_N$ aus Schritt b) in das numerische Berechnungsmodell des Gesamtbauteils und anschließendes Berechnen von Parametern der Rissspitzenbeanspruchung des rissbehafteten Gesamtbauteils mit der veränderten Rissgeometrie $a_N$ über die Simulationsvorrichtung unter Vorgabe einwirkender äußerer Lasten *F;* und dem zeitlichen Versatz t der einwirkenden Lasten *F;* und

d) Optionales Wiederholen der Verfahrensschritte b) und c) um eine beliebige ganzzahlige Anzahl an Wiederholungen, wobei im Schritt b) jeweils die berechneten Parameter der Rissspitzenbeanspruchung aus dem vorhergehenden Schritt übernommen werden und wobei im Schritt c) die veränderte Rissgeometrie $a_N$ aus dem vorhergehenden Schritt übernommen und eingebracht wird zur Bestimmung eines fortschreitenden dynamischen Rissverhaltens.

Bei dem erfindungsgemäßen Prüfverfahren findet wie bei dem erfindungsgemä-ßen Prüfsystem, durch den Parameteraustausch erfindungsgemäß eine Verzahnung zwischen Experiment in der Prüfmaschine und dem digitalen Berechnungsmodell statt, wobei sich diese gegenseitig steuern bzw. regeln. Durch das erfindungsgemäße Prüfverfahren wird durch die gewählte Verzahnung ein digital-physikalischer Regelkreis ausgebildet.

Im Nachfolgenden wird unter Bezugnahme auf die beigefügte Figur schematisch eine beispielhafte Ausführungsform des erfindungsgemäßen digital physikalischen Prüfsystems erläutert.

Es zeigt:

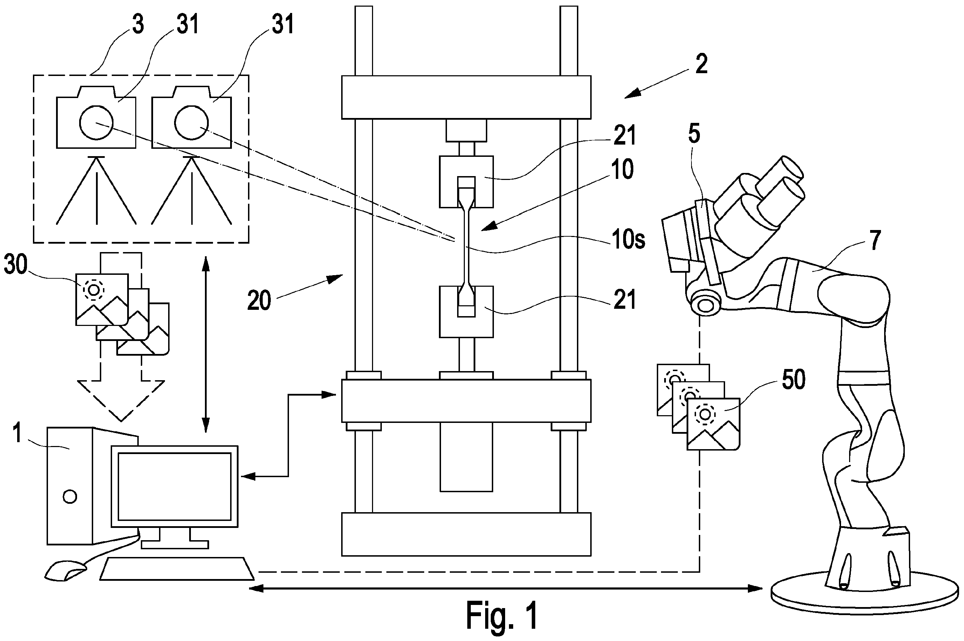

Figur 1     eine schematische Ansicht eines digital physikalischen Prüfsystems gemäß der vorliegenden Erfindung.

Das digital physikalische Prüfsystem gemäß Figur 1 umfasst zunächst eine Simulationsvorrichtung 1, welche wiederum ein numerisches Berechnungsmodel zur digitalen Modellierung der statischen Rissspitzenbeanspruchung eines rissbehafteten Bauteils umfasst. Wie in der Figur 1 schematisch dargestellt, kann es sich bei der Simulationsvorrichtung um jegliche Computerhardware, beispielsweise um einen einzelnen Computer oder um verteilte und miteinander vernetzte Computer handeln, auch welchen eine numerisches Berechnungsmodell gespeichert ist und daran beispielsweise mit der Methode der Finiten Elemente entsprechende numerischen Simulationen durchgeführt werden können. Weiter umfasst das digital physikalische Prüfsystem eine Testvorrichtung 2 zur physikalischen Prüfung des dynamischen Schädigungs- und Rissfortschrittsverhaltens eines rissbehafteten Prüfkörpers 10. Die Testvorrichtung 2 umfasst wiederum eine Prüfmaschine 20 mit einer Einspannungseinrichtung 21 zur Festlegung und dynamischen Lastbeaufschlagung eines rissbehafteten Prüfkörpers 10 mittels der Prüfmaschine 20. Die Prüfmaschine 20 ist in der dargestellten schematischen Ausführungsform vereinfacht als eine axiale Prüfmaschine dargestellt, wobei erfindungsgemäß jedoch insbesondere biaxiale bzw. multiaxiale Lastzustände mittels der Prüfmaschine 20 auf den Prüfkörper 10 aufgebracht werden können. Erfindungsgemäß kann es sich somit bei der Prüfmaschine 20 um eine biaxiale Prüfmaschine oder um eine uniaxiale Prüfmaschine mit entsprechender Probeneinspannung, die mehraxiale Spannungszustände in die Probe einleitet, handeln. Die Testvorrichtung 2 umfasst weiterhin eine Erkennungsvorrichtung 3 zur automatischen Detektion und Nachverfolgung mindestens eines rissbehafteten Bereiches des Prüfkörpers 10, welche in der dargestellten Ausführungsform in Form von zwei optischen Bildaufnahmeeinrichtungen 31 dargestellt ist.

Der in der Prüfmaschine 20 den Belastungen ausgesetzte Prüfkörper 10 kann insbesondere ein genormter Prüfkörper sein.

Die Erkennungseinrichtung 3 kann insbesondere eine erste ortsfeste Bildaufnahmeeinrichtung 31 umfassen, mittels derer makroskopische Referenzaufnahmen 30 des rissbehafteten Prüfkörpers 10 generierbar sind. Weiterhin optional kann die Erkennungsvorrichtung 3 eine zweite positionierbare Bildaufnahmevorrichtung 5 umfassen, mittels derer mikroskopische Aufnahmen 50 zumindest des Bereichs mindestens einer Rissspitze bzw. eines Schädigungsbereiches des rissbehafteten Prüfkörpers 10 generierbar sind. Die Raumlage der zweiten positionierbaren Bildaufnahmeeinrichtung 5 ist, wie in der Figur 1 gezeigt, über eine Positionierungs- und Stelleinrichtung wie beispielsweise einen Roboterarm 7 translatorisch und rotatorisch im dreidimensionalen Raum veränderbar.

Wie dies in der Figur 1 mittels der gestrichelten Pfeile dargestellt ist, werden sowohl die makroskopischen Aufnahmen 30 als auch die mikroskopischen Aufnahmen 50 an die Simulationsvorrichtung 1 zur entsprechenden Auswertung weitergeleitet. Die Simulationsvorrichtung 1 kann weiterhin sowohl die Prüfmaschine 20 als auch die entsprechenden Aufnahme- und Erkennungseinrichtungen 3, 5, sowie darüber hinaus die Testvorrichtung 2 und/oder den Roboterarm 7 steuern und steht mit diesen, wie über die Doppelpfeile gezeigt im Signalfluss. Die Signale zwischen den vorbezeichneten Einrichtungen und Vorrichtungen können selbstverständlich drahtgebunden und/oder drahtlos übertragen werden.

**Patentansprüche**

1.  Digital- physikalisches Prüfsystem umfassend:

    eine Simulationsvorrichtung (1) umfassend ein numerisches Berechnungsmodell zur digitalen Modellierung der statischen Rissspitzenbeanspruchung eines rissbehafteten Gesamtbauteils und
    eine Testvorrichtung (2) zur physikalischen Prüfung des dynamischen Schädigungs- und Rissfortschrittsverhaltens eines rissbehafteten Prüfkörpers (10);
    wobei die Testvorrichtung (2) eine Prüfmaschine (20) mit einer Einspannungseinrichtung (21) zur Festlegung und dynamischen Lastbeaufschlagung eines rissbehafteten Prüfkörpers (10) mittels der Prüfmaschine (20) und eine Erkennungseinrichtung (3) zur Detektion und Nachverfolgung mindestens eines rissbehafteten Bereiches des Prüfkörpers (10) umfasst,
    wobei das Prüfsystem ausgebildet ist die folgenden Verfahrensschritte automatisiert auszuführen:

    a) Initiales Berechnen von Parametern der Rissspitzenbeanspruchung des rissbehafteten Gesamtbauteils über die Simulationsvorrichtung (1) unter Vorgabe einer initialen Rissgeometrie $a_{initial}$ des Gesamtbauteils, einwirkender äu-ßerer Lasten $\boldsymbol{F}$ auf das Gesamtbauteil und dem zeitlichen Verlauf der einwirkenden Lasten $\Delta\boldsymbol{F}$;
    b) Aufbringen einer Anzahl an Lastspielinkrementen N auf den rissbehafteten Prüfkörper (10) durch Vorgabe der berechneten Parameter der Rissspitzenbeanspruchung aus Schritt a) und einer Lastspielzahl N mittels der Prüfmaschine (20) und Messen der veränderten Rissgeometrie $a_N$, umfassend die Risspfadgeometrie sowie die Rissspitzenkoordinaten $a_x$ und $a_y$, an dem Prüfkörper (10) mittels der Erkennungsvorrichtung (3) als Rissfortschrittsinkrement aufgrund des eingeprägten Lastspielinkrements;
    c) Einbringen der veränderten Rissgeometrie $a_N$ aus Schritt b) in das numerische Berechnungsmodell des Gesamtbauteils und anschließendes Berechnen von Parametern der Rissspitzenbeanspruchung des rissbehafteten Gesamtbauteils mit der veränderten Rissgeometrie $a_N$ über die Simulationsvorrichtung (1) unter Vorgabe einwirkender äußerer Lasten $\boldsymbol{F}$ und dem zeitlichen Verlauf $t$ der einwirkenden Lasten $\Delta\boldsymbol{F}$; und
    d) Optionales Wiederholen der Verfahrensschritte b) und c) um eine beliebige ganzzahlige Anzahl an Wiederholungen, wobei im Schritt b) jeweils die berechneten Parameter der Rissspitzenbeanspruchung aus dem vorhergehenden Schritt übernommen werden und wobei im Schritt c) die veränderte Rissgeometrie $a_N$ aus dem vorhergehenden Schritt übernommen und eingebracht wird zur Bestimmung eines fortschreitenden Ermüdungsrisses.

2.  Prüfsystem nach Anspruch 1, wobei die Simulationsvorrichtung (1) ausgebildet ist um Parameter der Rissspitzenbeanspruchung für einen stationären Riss abhängig von auf das Gesamtbauteil einwirkender äußerer Lasten $\boldsymbol{F}$, der Rissgeometrie $a$ und dem zeitlichen Verlauf der einwirkenden äußeren Lasten $\Delta\boldsymbol{F}$ zu berechnen.

3.  Prüfsystem nach Anspruch 1 oder 2, wobei die zu berechnenden Parameter der Rissspitzenbeanspruchung ausgewählt sind aus mindestens einem Element aus der Gruppe von:

    - den Spannungsintensitätsfaktoren $K_I$, $K_{II}$, $K_{III}$,
    - der T-Spannung, und/oder
    - Termen höherer Ordnung der Williams-Reihe,
    - der Spannungen $\sigma_x$, $\sigma_y$, $\tau_{xy}$.

4.  Prüfsystem nach einem der vorausgehenden Ansprüche, wobei die Prüfmaschine (20) dazu ausgebildet ist eine Mixed-Mode-Belastung auf den Prüfkörper (10) einzuprägen oder über eine biaxiale Lastaufbringung definierte Spannungen parallel und senkrecht zu einem eingebrachten Riss in dem Prüfkörper (10) einzubringen.

5.  Prüfsystem nach einem der vorausgehenden Ansprüche, wobei in der Prüfmaschine (20) ein genormter Prüfkörper der Rissspitzenbelastung ausgesetzt wird.

6.  Prüfsystem nach einem der vorausgehenden Ansprüche, wobei der Prüfkörper (10) den rissbehafteten Ausschnitt des Gesamtbauteils abbildet.

**7.** Prüfsystem nach einem der vorausgehenden Ansprüche, wobei die Testvorrichtung (2) dazu ausgebildet ist im Verfahrensschritt b) folgende weitere Unterverfahrensschritte auszuführen:

b1) Generieren mindestens einer ersten makroskopischen Referenzaufnahme (30) mittels einer ersten ortsfesten Bildaufnahmeeinrichtung (31) und
einer Mehrzahl von mikroskopischen Referenzaufnahmen (50) mittels einer zweiten positionierbaren Bildaufnahmeeinrichtung (5) des unbelasteten rissbehafteten Prüfkörpers (10);
b2) Aufprägen einer Last oder eines Lastregimes auf den rissbehafteten Prüfkörper (10);
b3) Generieren mindestens einer makroskopischen Aufnahme (30) des rissbehafteten Prüfkörpers (10) unter anliegender Last gemäß Verfahrensschritt b2) und/oder nach Entlastung über die erste ortsfeste Bildaufnahmeeinrichtung (31);
b4) Berechnen der aktuellen Lokalisierung mindestens eines Bereiches einer Rissspitze im Prüfkörper bevorzugt unter Verwendung eines trainierten neuronalen Netzwerkes für die Risserkennung;
b5) bevorzugt Ausrichten der zweiten positionierbaren Bildaufnahmeeinrichtung (5) anhand des mindestens einen Bereiches einer Rissspitze im Prüfkörper (10) gemäß Verfahrensschritt b4) und Generieren mindestens einer mikroskopischen Aufnahme (50) des mindestens einen Bereiches einer Rissspitze im Prüfkörper (10) mittels der zweiten Bildaufnahmeeinrichtung (5) unter anliegender Last gemäß Verfahrensschritt b2) und/oder nach Entlastung; und
b6) Optionales Wiederholen der Verfahrensschritte b2) bis b5) um eine beliebige ganzzahlige Anzahl an Wiederholungen, wobei im Verfahrensschritt b2) eine von der zuvor aufgeprägten Last abweichende Last oder ein abweichendes Lastregime aufgeprägt wird.

**8.** Prüfsystem nach Anspruch 7, wobei das trainierte neuronale Netzwerk für die Risserkennung ein faltungsneuronales Netz (CNN) mit U-Netz Architektur mit mehreren Kodier- und Dekodierblöcken als Segmentierungszweig; und ein vollständig verbundenes neuronales Netz (FCNN) als Regressionszweig umfasst;

wobei die Dekodierblöcke mit den Kodierblöcken über einen Basisblock miteinander verbunden sind,
wobei die Kodier- und Dekodierblöcke der gleichen Ebene durch eine "Skip"/Sprung-Verbindung direkt miteinander verbunden sind,
wobei der Regressionszweig mit dem Basisblock des Segmentierungszweigs verbunden ist, und
wobei das computerimplementierte Trainingsverfahren zum Erhalt des trainierten neuronalen Netzes für die Schädigungserkennung die Schritte umfasst:

1) Initialisierung des neuronalen Netzes mit zufälligen Gewichten;
2) Berechnen des mittleren quadratischen Fehlers zwischen der Vorhersage der Rissspitzenposition und der tatsächlichen Rissspitzenposition $y = (\hat{y}_1, \hat{y}_2) \in [-1,1]^2$ über die Formel:

$$\mathrm{MSE}(y, \hat{y}) = \sqrt{(y_1 - \hat{y}_1)^2 + (y_2 - \hat{y}_2)^2} \tag{1}$$

als Fehler des Regressionszweiges des neuronalen Netzes;
3) Berechnen des Fehlers der Rissspitzensegmentierung "Dice"-Fehlers für die Segmentierungsaufgabe über die Formel:

$$\mathrm{Dice}(z, \hat{z}) = 1 - \frac{2 \sum_{ij} z_{ij}\, \hat{z}_{ij} + \varepsilon}{\sum_{ij}(z_{ij} + \hat{z}_{ij}) + \varepsilon} \tag{2}$$

wobei $z = (z_{ij})$ mit $z_{ij} \in [0,1]$ die Segmentierungsausgabe (nach Sigmoid-Aktivierung) bezeichnet und $\hat{z} = (\hat{z}_{ij})$ für die Grundwahrheit steht. Mit $\varepsilon > 0$ als kleine Konstante, die eingeführt wird, um den Fall $z = \hat{z} \equiv 0$ abzudecken, wobei bevorzugt $\varepsilon = 10^{-6}$ gewählt wird als Fehler des Segmentierungszweiges des neuronalen Netzes;
4) Berechnen einer gewichteten Gesamtverlustfunktion $\mathrm{Loss}_{\omega}(z, y, \hat{z}, \hat{y})$ über die Formel:

$$\mathrm{Loss}_{\omega}(z, y, \hat{z}, \hat{y}) = \mathrm{Dice}(z, \hat{z}) + \omega\, \mathrm{MSE}(y, \hat{y}) \tag{3}$$

wobei $\omega \geq 0$ ein Gewichtungsfaktor ist, der den Trainingseinfluss des FCNN/Segmentierungszweigs des neuronalen Netzes abstimmt;

5) Optimieren der Modellparameter des neuronalen Netzes mittels "Backpro-pagation"-Algorithmus unter Nutzung der gewichteten Gesamtverlustfunktion Loss$_\omega(z, y, \hat{z}, \hat{y})$ zum Erhalt des trainierten neuronalen Netzes für die Schädigungserkennung.

9. Prüfsystem nach Anspruch 7 oder 8, wobei das Unterverfahren vor dem Verfahrensschritt b2) weiterhin den Schritt umfasst:

b1-1) Kalibrieren der Positionierung der zweiten Bildaufnahmeeinrichtung (5) durch Abgleichen der aktuellen Raumlage der zweiten Bildaufnahmeeinrichtung (5) gegenüber der ersten ortsfesten Bildaufnahmeeinrichtung (31).

10. Prüfsystem nach einem der Ansprüche 7 bis 9, wobei im Verfahrensschritt b1) makroskopische Referenzaufnahmen (30) des gesamten unbelasteten rissbehafteten Prüfkörpers (10) mittels einer ersten ortsfesten Bildaufnahmeeinrichtung (31) und eine Mehrzahl von mikroskopischen Referenzaufnahmen (50) des gesamten unbelasteten Prüfkörpers (10) mittels der zweiten positionierbaren Bildaufnahmeeinrichtung (5) generiert werden.

11. Prüfsystem nach einem der Ansprüche 7 bis 10, wobei das Verfahren in dem Schritt b5) zusätzlich den Schritt umfasst: b51) optisches Fokussieren der zweiten Bildaufnahmeeinrichtung (5) auf dem Bereich der Schädigung bzw. der Rissspitze.

12. Digital- physikalisches Prüfverfahren umfassend die Verfahrensschritte:

a) Initiales Berechnen von Parametern der Rissspitzenbeanspruchung des rissbehafteten Gesamtbauteils über ein Simulationsvorrichtung (1) umfassend ein numerisches Berechnungsmodell zur digitalen Modellierung der statischen Rissspitzenbeanspruchung eines rissbehafteten Gesamtbauteils unter Vorgabe einer initialen Rissgeometrie $a_{initial}$ des Gesamtbauteils, einwirkender äußerer Lasten $F$ auf das Gesamtbauteil und dem zeitlichen Verlauf der einwirkenden Lasten $\Delta F$;

b) Aufbringen einer Zahl an Lastspielinkrementen N auf einen rissbehafteten Prüfkörper (10) mittels einer Prüfmaschine (20) durch Vorgabe der berechneten Parameter der Rissspitzenbeanspruchung aus Schritt a) und einer Lastspielzahl N und Messen der veränderten Rissgeometrie $a_N$, umfassend die Risspfadgeometrie sowie die Rissspitzenkoordinaten $a_x$ und $a_y$, mittels einer Erkennungseinrichtung (3) zur Detektion und Nachverfolgung mindestens eines rissbehafteten Bereiches an dem Prüfkörper (10) als Rissfortschrittsinkrement aufgrund des eingeprägten Lastspielinkrements;

c) Einbringen der veränderten Rissgeometrie $a_N$ aus Schritt b) in das numerische Berechnungsmodell des Gesamtbauteils und anschließendes Berechnen von Parametern der Rissspitzenbeanspruchung des rissbehafteten Gesamtbauteils mit der veränderten Rissgeometrie $a_N$ über die Simulationsvorrichtung (1) unter Vorgabe einwirkender äußerer Lasten $F$ und dem zeitlichen Versatz t der einwirkenden Lasten $F$; und

d) Optionales Wiederholen der Verfahrensschritte b) und c) um eine beliebige ganzzahlige Anzahl an Wiederholungen, wobei im Schritt b) jeweils die berechneten Parameter der Rissspitzenbeanspruchung aus dem vorhergehenden Schritt übernommen werden und wobei im Schritt c) die veränderte Rissgeometrie $a_N$ aus dem vorhergehenden Schritt übernommen und eingebracht wird zur Bestimmung eines fortschreitenden dynamischen Rissverhaltens.

Fig. 1

Europäisches Patentamt
European Patent Office
Office européen des brevets

# EUROPÄISCHER RECHERCHENBERICHT

**Nummer der Anmeldung**

EP 24 15 7657

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHANG WEI ET AL: "Investigation of incremental fatigue crack growth mechanisms using in situ SEM testing", INTERNATIONAL JOURNAL OF FATIGUE, Bd. 42, 12. März 2011 (2011-03-12), Seiten 14-23, XP028917376, ISSN: 0142-1123, DOI: 10.1016/J.IJFATIGUE.2011.03.004 * Abschnitt 3.3; Abbildung 2 * * Abschnitt 4; Abbildung 9 * | 1-12 | INV. G01N3/32 |
| | ----- | | |
| A | US 4 574 642 A (FLEISCHMAN THOMAS S [US]) 11. März 1986 (1986-03-11) * Abbildung 1 * | 1-12 | |
| | ----- | | |
| A | STROHMANN TOBIAS ET AL: "Automatic detection of fatigue crack paths using digital image correlation and convolutional neural networks", FATIGUE AND FRACTURE OF ENGINEERING MATERIALS AND STRUCTURES., Bd. 44, Nr. 5, 17. Februar 2021 (2021-02-17), Seiten 1336-1348, XP093061721, GB ISSN: 8756-758X, DOI: 10.1111/ffe.13433 Gefunden im Internet: URL:https://onlinelibrary.wiley.com/doi/full-xml/10.1111/ffe.13433> * Zusammenfassung * | 1-12 | **RECHERCHIERTE SACHGEBIETE (IPC)** G01N |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 12. Juli 2024 | Mauritz, Jakob |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 24 15 7657

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | MELCHING DAVID ET AL: "Explainable machine learning for precise fatigue crack tip detection", SCIENTIFIC REPORTS, Bd. 12, Nr. 1, 9. Juni 2022 (2022-06-09), XP093061718, DOI: 10.1038/s41598-022-13275-1 Gefunden im Internet: URL:https://www.nature.com/articles/s41598-022-13275-1> * Zusammenfassung *<br><br>- - - - - | 1-12 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 12. Juli 2024 | Mauritz, Jakob |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 15 7657

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2024

| Im Recherchenbericht angeführtes Patentdokument | Datum der Veröffentlichung | Mitglied(er) der Patentfamilie | Datum der Veröffentlichung |
|---|---|---|---|
| US 4574642 A | 11-03-1986 | KEINE | |

EPO FORM P0461

Für nähere Einzelheiten zu diesem Anhang : siehe Amtsblatt des Europäischen Patentamts, Nr.12/82